# EUROPÄISCHE PATENTSCHRIFT

(11) **EP 2 668 446 B1**
(45) Veröffentlichungstag und Bekanntmachung des Hinweises auf die Patenterteilung: **06.05.2020**
(21) Anmeldenummer: 12708245.1
(22) Anmeldetag: 02.03.2012
(51) Int. Cl.: F23J 1/00

(54) **AUFBEREITEN VON MÜLLVERBRENNUNGSASCHE**
PROCESSING OF WASTE INCINERATION ASHES
TRAITEMENT DE CENDRES D'INCINÉRATION D'ORDURES

(30) Priorität: 04.03.2011 DE 102011013033
(43) Veröffentlichungstag der Anmeldung: 04.12.2013
(73) Patentinhaber: MDSU Mitteldeutsche Schlacken Union GmbH & Co. KG, 39288 Burg (DE); Schauenburg Maschinen-und Anlagen-Bau GmbH, 45478 Mülheim (DE)
(72) Erfinder: Evers, Friedrich-Wilhelm, 38350 Helmstedt (DE); Beckmann, Alexandra, 38350 Helmstedt (DE); Klinkhammer, Manfred, 47506 Neukirchen-Vluyn (DE)
(74) Vertreter: adares Patent- und Rechtsanwälte Reininger & Partner GmbB
(86) Internationale Anmeldenummer: PCT/EP2012/000935
(87) Internationale Veröffentlichungsnummer: WO 2012/119737

(56) Entgegenhaltungen:
- EP-A1- 1 348 905
- WO-A1-2011/018977
- DE-A1- 19 508 488

## Beschreibung

Die Erfindung betrifft ein Verfahren zum Aufbereiten von Müllverbrennungsasche, insbesondere von Hausmüllverbrennungsasche (HMVA). Die bei der Verbrennung von Müll, insbesondere von Hausmüll und Gewerbemüll, entstehende, früher auch als Schlacke bezeichnete Asche kann nicht ohne weiteres entsorgt oder wiederverwertet werden, da die Asche Schadstoffe enthält und somit aufgrund geltender einschlägiger gesetzlicher Bestimmungen einer besonderen Handhabung bedarf. Daher gehen die Betreiber von Müllverbrennungsanlagen bislang meist so vor, dass die anfallende Asche vollständig deponiert, was allerdings mit relativ hohen Kosten verbunden ist, oder unter hohen Auflagen z.B. als niedrig klassifizierter Baustoff verwertet wird. Ein bekanntes Verfahren sowie eine Anlage zum Aufbereiten von Müllverbrennungsasche sind in der Offenlegungsschrift DE 195 08 488 A1 offenbart.

Aufgabe der Erfindung ist es daher, eine Möglichkeit zu schaffen, zumindest einen Teil der Müllverbrennungsasche wirtschaftlich zu nutzen.

Die Lösung dieser Aufgabe erfolgt durch die Merkmale des Anspruchs 1 und insbesondere durch ein Verfahren zum Aufbereiten von Müllverbrennungsasche, insbesondere von Hausmüllverbrennungsasche (HMVA), bei dem ein Verfahren zum Klassieren der Asche und ein Verfahren zur Rückgewinnung von Phosphaten aus der Asche miteinander kombiniert werden. Die Asche wird einer Nassklassierung unterworfen und dabei mit einer Flüssigkeit gemischt. Zur Rücklösung der Phosphate wird die Asche mit einer sauren wässrigen Lösung behandelt, wobei anschließend die in der Lösung enthaltenen Phosphate isoliert werden. Erfindungsgemäß ist vorgesehen, dass die Flüssigkeit, mit der die Asche im Rahmen der Nassklassierung gemischt wird, die saure wässrige Lösung ist, mit der die Asche zur Rücklösung der Phosphate behandelt wird.

Es wurde gefunden, dass eine Nassklassierung von Müllverbrennungsasche die Möglichkeit eröffnet, die Asche in einen mit Schadstoffen belasteten Anteil und einen schadstoffarmen oder schadstofffreien Anteil zu trennen, wobei der schadstoffarme oder schadstofffreie Anteil - bezogen auf das Trockengewicht der das Ausgangsprodukt bildenden Asche - derart groß ist, dass eine wirtschaftlich sinnvolle Ascheaufbereitung durch Nassklassierung mit anschließender Verwertung des schadstoffarmen oder schadstofffreien Anteils, beispielsweise im Straßenbau, bereits ohne die zusätzliche Phosphatrückgewinnung möglich ist.

Besonders vorteilhaft ist die erfindungsgemäße Verfahrenskombination deshalb, da die Phosphatrückgewinnung sich den Umstand zunutze macht, dass bei der Nassklassierung ohnehin ein Zusammenwirken der Asche mit einer Flüssigkeit erfolgt.

Die Erfinder haben erkannt, dass das bei der Nassklassierung erfolgende Mischen der Asche mit einer Flüssigkeit gleichzeitig einen Verfahrensschritt bilden kann, bei welchem die Asche mit einer sauren wässrigen Lösung behandelt wird, was es ermöglicht, die in der Asche enthaltenen Phosphate zu lösen. Ferner wurde erkannt, dass im Hinblick auf die Nassklassierung die Verwendung eines sauren Milieus sowohl in technischer als auch in wirtschaftlicher Hinsicht unbedenklich ist. Eine säurefeste Auslegung der für die Nassklassierung eingesetzten Einrichtungen beispielsweise ist mit vertretbarem Aufwand problemlos möglich.

Eine vereinfachte Kosten-/Nutzenbilanz des kombinierten erfindungsgemäßen Verfahrens stellt sich also prinzipiell derart dar, dass die Kosten für Errichtung und Betrieb einer für das erfindungsgemäße Verfahren geeigneten Anlage sowie für die sachgerechte Behandlung, insbesondere Deponierung, des verbleibenden, mit Schadstoffen belasteten Ascheanteils den Erlösen aus der Verwertung des schadstoffarmen oder schadstofffreien Ascheanteils und aus der Verwertung des gewonnen Phosphats gegenüberzustellen sind. Außerdem ist zu berücksichtigen, dass die Betreiber von Müllverbrennungsanlagen dazu bereit sind, für die Abnahme der bei der Müllverbrennung entstehenden Asche zu bezahlen, um das komplizierte Handling nicht selbst übernehmen zu müssen. Für einen Betreiber des erfindungsgemäßen Verfahrens ist somit bereits die Beschaffung der aufzubereitenden Asche mit Einnahmen verbunden.

Es ist somit die Erfindung, die auf diese Weise erstmals eine sowohl technisch durchführbare und als auch wirtschaftlich interessante Aufbereitung von Müllverbrennungsasche ermöglicht.

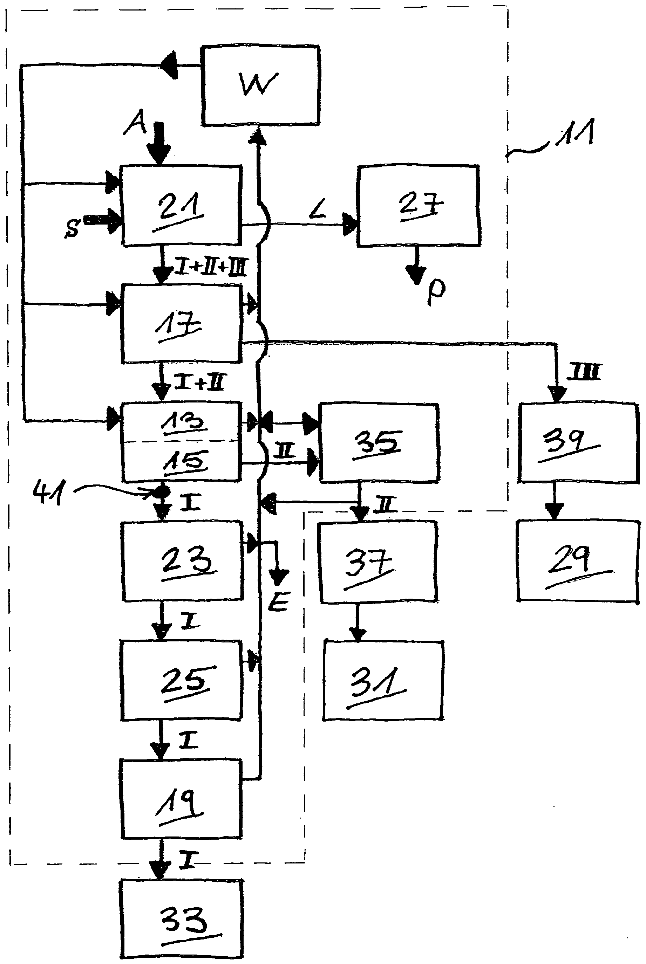

Bevorzugte Ausführungsformen der Erfindung sind auch in den abhängigen Ansprüchen, der Beschreibung sowie der Zeichnung angegeben.

Vorzugsweise wird für die Nassklassierung der Asche ein im Wesentlichen geschlossener Flüssigkeitskreislauf verwendet, dem für die Isolierung der Phosphate zumindest ein Teil der sauren wässrigen Lösung, insbesondere vorübergehend, entnommen wird. Insbesondere erfolgt die Entnahme bei laufender oder ausgesetzter Nassklassierung. Demnach ist also entweder ein praktisch permanenter Parallelbetrieb oder ein insofern abwechselnder Betrieb möglich, als die Nassklassierung vorübergehend ausgesetzt und die gesamte Lösung zwecks Isolierung der Phosphate entnommen wird.

Die Entnahme der Lösung für die Isolierung der Phosphate kann grundsätzlich laufend erfolgen, wobei es alternativ auch möglich ist, die Entnahme nur zu vorbestimmten Zeiten vorzunehmen.

Insbesondere wird mit der Isolierung der Phosphate in Abhängigkeit von dem pH-Wert der sauren wässrigen Lösung begonnen.

Vorzugsweise erfolgt die Isolierung der Phosphate in einer Einrichtung, die von einer Einrichtung zur Behandlung der Asche mit der Lösung getrennt und der die Lösung gemäß einer steuer- oder regelbaren Entnahme zuführbar ist. Dabei erfolgt die Entnahme insbesondere in Abhängigkeit von dem pH-Wert der Lösung.

Gemäß einem Ausführungsbeispiel der Erfindung wird zur Herstellung der sauren wässrigen Lösung Wasser bereitgestellt, wobei dem Wasser eine Säure zugeführt wird. Dabei wird insbesondere Citronensäure oder Schwefelsäure verwendet, da diese vergleichsweise kostengünstig erhältlich ist, wobei alternativ z.B. auch Schwefelsäure verwendet werden kann.

Die Isolierung der Phosphate erfolgt insbesondere durch Rückfällung. Die hierfür einzusetzenden Verfahren und Einrichtungen sind an sich grundsätzlich bekannt, so dass hierauf nicht näher eingegangen wird.

Die Rückgewinnung der Phosphate wird durch höhere Temperaturen der sauren wässrigen Lösung begünstigt, ohne hierdurch die Nassklassierung zu beeinträchtigen. Unter Berücksichtung des für die Erwärmung der sauren wässrigen Lösung erforderlichen Energieeintrags wurde gefunden, dass ein wirtschaftlicher Betrieb bereits bei Temperaturen der sauren wässrigen Lösung im Bereich von 20 bis 40°C möglich ist. Für eine Anlage, die zur Durchführung des erfindungsgemäßen Verfahrens geeignet ist, kann folglich eine Temperatur der sauren wässrigen Lösung derart gewählt werden, dass die Anlage insgesamt in einem wirtschaftlichen Optimalbereich gefahren werden kann.

Gemäß einem bevorzugten Ausführungsbeispiel der Erfindung wird die Asche bei der Nassklassierung unter Anwendung kornschonender Klassierungsverfahren in wenigstens eine mit Schadstoffen belastete Feinfraktion und zumindest eine schadstoffarme oder schadstofffreie Grobfraktion klassiert. Insbesondere ist vorgesehen, dass die Asche ausschließlich durch Nassklassierung klassiert wird und/oder dass die Asche vollständig in wenigstens einen mit Schadstoffen belasteten Anteil und zumindest einen schadstoffarmen oder schadstofffreien Anteil klassiert wird.

Diese Ausführungsform beruht auf der Erkenntnis, dass bei einer Aufbereitung von Müllverbrennungsasche die Konzentration von in der Asche enthaltenen relevanten Schadstoffen in einer Feinfraktion, also in einem oder mehreren Anteilen mit einer relativ niedrigen maximalen Korngröße, dann wirtschaftlich interessant sein kann, wenn es gelingt, den Anteil dieser Feinfraktion am Ausgangsmaterial, also an der in die Aufbereitung eingebrachten Asche, möglichst klein zu halten.

Die Erfinder haben erkannt, dass sich diese Bedingung dann erfüllen lässt, wenn dafür gesorgt wird, dass bei der Aufbereitung der Asche so weit wie möglich verhindert wird, dass die die Asche bildenden Partikel zerkleinert werden, da eine Zerkleinerung der Asche zusätzliche Oberflächen schafft, an die sich Schadstoffe binden können, was zur Folge hat, dass der mit Schadstoffen belastete Anteil zunimmt, und zwar in einer Weise derart, dass derjenige Anteil der Asche, der nicht gewinnbringend wiederverwertet werden kann, sondern vielmehr teuer deponiert werden muss, zu groß ist.

Dabei kommt diese Ausführungsform nicht dadurch zum Ziel, dass die bekannte Trockenklassierung modifiziert wird, sondern vielmehr dadurch, dass die Müllverbrennungsasche einer an sich grundsätzlich bekannten Nassklassierung unterworfen wird. Die Erfinder haben erkannt, dass der Umstand ausgenutzt werden kann, dass gerade eine Nassklassierung die Anwendung besonders kornschonender Klassierungsverfahren ermöglicht. Unter kornschonenden Klassierungsverfahren versteht der Fachmann solche Methoden, bei denen die zu klassierenden Partikel nicht zerkleinert bzw. zerstört werden und bei denen insbesondere auch kein Staub entsteht, so dass die Korngrößenverteilung des Eingangsmaterials gegenüber jener des Ausgangsmaterials insgesamt, also aller bei der Klassierung entstehenden Fraktionen zusammen, praktisch unverändert ist.

Diese Idee, Müllverbrennungsasche einer Nassklassierung zu unterwerfen, da gerade eine Nassklassierung eine besonders kornschonende Behandlung der Asche ermöglicht, und ferner diese Nassklassierung so auszulegen, dass ein eine oder mehrere Feinfraktionen umfassender Ascheanteil eine Korngrößenverteilung mit einer Obergrenze derart besitzt, dass dieser Ascheanteil einerseits möglichst alle relevanten Schadstoffe enthält und andererseits möglichst klein ist, macht es möglich, dass nur ein relativ kleiner Anteil der Asche aufgrund seiner Schadstoffbelastung nicht ohne weiteres wiederverwertet werden kann, wohingegen ein vergleichsweise großer schadstoffarmer oder schadstofffreier Ascheanteil einer Wiederverwertung zugeführt werden kann.

Hierdurch wird eine Möglichkeit zur Aufbereitung von Müllverbrennungsasche geschaffen, bei der im Einklang mit selbst strengen gesetzlichen Bestimmungen ein signifikanter Anteil der Asche einer wirtschaftlich interessanten Wiederverwertung zugeführt werden kann.

Bevorzugt wird die Nassklassierung derart durchgeführt, dass in der Feinfraktion die Untergrenze der Korngröße 0 µm beträgt und die Obergrenze der Korngröße ungefähr im Bereich von 50 bis 500 µm liegt, insbesondere ungefähr im Bereich von 200 bis 300 µm liegt und bevorzugt etwa 250 µm beträgt.

Vorzugsweise wird die Asche vor der Nassklassierung, insbesondere vor dem Einbringen in eine Aufbereitungsanlage, einer mechanischen, insbesondere trockenen Vorbehandlung unterworfen, bei der aus der Asche Metallteile und unverbrannte Störstoffe entfernt werden. Dabei kann die Asche feucht sein. Eine solche Vorbehandlung ist für das erfindungsgemäße Verfahren allerdings nicht zwingend. Es wurde gleichwohl gefunden, dass das erfindungsgemäße Verfahren dann besonders vorteilhaft durchgeführt werden kann, wenn die in die Aufbereitungsanlage eingebrachte Asche eine bestimmte Korngrößenverteilung aufweist. Bevorzugt ist in diesem Zusammenhang vorgesehen, dass die aus einer Müllverbrennungsanlage stammende Asche derart vorbehandelt wird, dass die Asche mit einer Korngrößenverteilung in die Nassklassierung, insbesondere in eine Aufbereitungsanlage, eingebracht wird, deren Obergrenze nicht mehr als 100 mm beträgt, wobei insbesondere die Obergrenze im Bereich von 40 bis 50 mm liegt und bevorzugt etwa 45 mm beträgt. Wie an anderer Stelle erwähnt, ist es insbesondere im Hinblick auf eine optische Sichtung von Metallen zum Zwecke der Abtrennung der Metalle von Vorteil und somit eine bevorzugte Ausgestaltung der Erfindung, wenn die Abtrennung nicht trocken erfolgt, sondern die Metalle zuvor "mitgewaschen" werden.

Vorzugsweise ist vorgesehen, dass bei der Nassklassierung die folgenden Schritte zeitlich nacheinander durchgeführt werden: Zunächst wird die Asche mit der sauren wässrigen Lösung gemischt. Anschließend wird aus dem dabei entstehenden Produkt wenigstens eine erste Grobfraktion abgetrennt. Dabei findet insbesondere eine Siebeinrichtung Verwendung. Danach wird aus dem von der ersten Grobfraktion befreiten Produkt zumindest eine zweite Grobfraktion abgetrennt, insbesondere unter Verwendung einer Aufstromtechnik. Der dabei entstehenden Feinfraktion wird anschließend Flüssigkeit entzogen. Hierbei findet insbesondere eine Kammerfilterpresse Verwendung.

In einer möglichen Ausgestaltung der Erfindung kann vorgesehen sein, dass zumindest ein Parameter einer für die Nassklassierung verwendeten Flüssigkeit unterhalb oder oberhalb eines vorgegebenen Grenzwertes gehalten wird. Insbesondere wird dabei Flüssigkeit aus einem Flüssigkeitskreislauf ausgeschleust, sobald der Grenzwert erreicht, insbesondere überschritten oder unterschritten, wird.

Von praktischer Bedeutung kann diese Ausgestaltung insbesondere dann sein, wenn einerseits Kosten gespart werden sollen und andererseits verhindert werden soll, dass bestimmte Bestandteile auf die Asche "verschleppt" werden. Bei derartigen Bestandteilen kann es sich insbesondere um Salze handeln, beispielsweise hauptsächlich Chloride und Sulfate. Die Konzentration dieser Bestandteile kann beispielsweise durch eine Leitfähigkeitsmessung in der Flüssigkeit ermittelt werden, d. h. bei dem überwachten Parameter im Flüssigkeitskreislauf kann es sich insbesondere um die elektrische Leitfähigkeit handeln. Demgemäß wird erst dann Flüssigkeit aus dem Kreislauf ausgeschleust, wenn die Leitfähigkeit den vorgegebenen Grenzwert erreicht hat. Hierdurch wird einerseits der Verbrauch an frischer Flüssigkeit, insbesondere Wasser, minimiert, wodurch Kosten gespart werden. Andererseits wird verhindert, dass die oder jede schadstoffarme bzw. schadstofffreie Grobfraktion einen zu hohen Anteil an den jeweiligen Bestandteilen, insbesondere an Salzen, enthält. Der Grenzwert kann insbesondere von den Wünschen des jeweiligen Anlagenbetreibers abhängig gemacht oder von dem Klärwerk vor Ort vorgegeben werden.

Ein Vorteil des erfindungsgemäßen Verfahrens besteht darin, dass es in verfahrens- und anlagentechnischer Hinsicht von der die Asche liefernden Müllverbrennungsanlage selbst unabhängig durchgeführt werden kann aber nicht muss. Gemäß einer bevorzugten Ausführungsform ist daher vorgesehen, dass das erfindungsgemäße Verfahren in einer von einer Müllverbrennungsanlage getrennten Aufbereitungsanlage durchgeführt wird, wobei dies aber nicht zwingend und grundsätzlich auch eine Integration in eine Müllverbrennungsanlage möglich ist.

Gemäß einer weiteren Ausgestaltung der Erfindung kann die erfindungsgemäße Aufbereitung der Asche an einer oder mehreren Stellen eine Metallaufbereitung beinhalten, d. h. die Abtrennung von Metallen. Diese Aufbereitung kann sowohl eine FE-Trennung, also ein Abtrennen von Eisenmetallen, als auch eine NE-Trennung, also eine Abtrennung von Nichteisenmetallen, beinhalten. Folglich können für diese Aufbereitung klassische FE- bzw. NE-Abscheider eingesetzt werden. Alternativ oder zusätzlich kann eine optische Sichtung erfolgen. Diese optische Sichtung kann sowohl manuell als auch maschinell erfolgen. Grundsätzlich sind zahlreiche Varianten denkbar, die jeweils eine sortenreine Metallaufbereitung ermöglichen.

Bevorzugt erfolgt die Metallaufbereitung an einer oder jeder schadstofffreien bzw. schadstoffarmen Grobfraktion vor deren Aufhaldung.

Insbesondere erfolgt die Abtrennung der Metalle nicht trocken vor oder nach der Nassklassierung der HMVA, sondern nach dem Durchlaufen zumindest eines Teils der Nassklassierung. Mit anderen Worten werden die Metalle mit im Nass- bzw. Waschprozess gefahren, d.h. die Metalle werden mitgewaschen. Dies hat den Vorteil, dass die Metalle sehr sauber werden, d.h. die Metalle werden durch das Waschen so rein, dass sie optisch anhand ihrer jeweiligen Farbe erkannt werden können, wodurch eine optische Sichtung der Metalle - manuell oder maschinell - verbessert oder überhaupt erst ermöglicht wird. Auch die Ausbeute an Metallen wird durch dieses "Mitwaschen" erhöht. Das Mitfahren der Metalle im Nass- bzw. Waschprozess, d.h. das "Mitwaschen" der Metalle, kann auch dann erfolgen, wenn bei der Abtrennung der Metalle keine wie auch immer geartete optische Sichtung erfolgt. Die "mitgewaschenen" Metalle können auch in für sich genommen herkömmlicher Art und Weise mittels bekannter Metallabscheider abgetrennt werden.

Auf diese Weise kann die Wirtschaftlichkeit der Ascheaufbereitung erheblich gesteigert werden.

Die Lösung der Aufgabe erfolgt außerdem durch eine Aufbereitungsanlage für Müllverbrennungsasche, insbesondere für Hausmüllverbrennungsasche (HMVA), die zum Klassieren der Asche und zur Rückgewinnung von Phosphaten aus der Asche ausgebildet ist. Die Anlage umfasst eine Behandlungseinrichtung, in der zur Rücklösung der Phosphate die Asche mit einer sauren wässrigen Lösung behandelbar ist, sowie eine Isoliereinrichtung, in der die in der Lösung enthaltenen Phosphate isolierbar sind, wobei die Anlage zu einer Nassklassierung der Asche und dabei zu einem Mischen der Asche mit einer Flüssigkeit ausgebildet ist, und wobei die Flüssigkeit, mit der die Asche im Rahmen der Nassklassierung mischbar ist, die saure wässrige Lösung ist, mit der die Asche zur Rücklösung der Phosphate behandelbar ist.

Insbesondere ist die Anlage zur Durchführung eines Verfahrens der hier angegebenen Art ausgebildet.

In einer bevorzugten Ausgestaltung der Anlage ist die Isoliereinrichtung von der Behandlungseinrichtung getrennt, wobei der Isoliereinrichtung die Lösung aus der Behandlungseinrichtung mittels einer Entnahmeeinrichtung zuführbar ist. Bevorzugt ist die Entnahmeeinrichtung steuer- oder regelbar, und zwar insbesondere in Abhängigkeit von dem pH-Wert der Lösung.

Vorzugsweise weist die Anlage zumindest für die Nassklassierung wenigstens einen im Wesentlichen geschlossenen Flüssigkeitskreislauf auf. Hierdurch kann erreicht werden, dass die Asche relativ lang andauernd und vergleichsweise intensiv mit der Flüssigkeit, nämlich der sauren wässrigen Lösung, zusammenwirkt.

Vorzugsweise umfasst die Anlage kornschonende Nassklassierungseinrichtungen, wobei die Anlage derart ausgelegt ist, dass die Asche in wenigstens eine mit Schadstoffen belastete Feinfraktion und zumindest eine schadstoffarme oder schadstofffreie Grobfraktion klassierbar ist. Bevorzugt sind in der Anlage ausschließlich kornschonende Nassklassierungseinrichtungen vorgesehen.

Gemäß einem weiteren bevorzugten Ausführungsbeispiel ist die erfindungsgemäße Aufbereitungsanlage derart ausgelegt, dass in der bei der Nassklassierung entstehenden Feinfraktion die Untergrenze der Korngröße 0 µm beträgt und die Obergrenze der Korngröße ungefähr im Bereich von 50 bis 500 µm liegt, insbesondere ungefähr im Bereich von 200 bis 300 µm liegt und bevorzugt etwa 250µm beträgt.

Insbesondere ist vorgesehen, dass die erfindungsgemäße Anlage eine Mischstufe umfasst, in der die Anlage mit der Flüssigkeit gemischt wird, wobei insbesondere die Mischstufe die Behandlungseinrichtung umfasst oder bildet, oder umgekehrt.

Eine gemeinsame Einrichtung, in der im Rahmen der Nassklassierung die Asche sowohl mit einer Flüssigkeit gemischt als auch im Rahmen der Phosphatrückgewinnung mit einer sauren wässrigen Lösung behandelt wird, kann vorteilhaft sein, ist jedoch nicht zwingend. Es ist alternativ auch möglich, eine Mischstufe und eine Behandlungsstufe jeweils separat und in Prozessrichtung hintereinander vorzusehen, so dass beispielsweise zunächst die Asche lediglich mit Wasser gemischt und anschließend in einer separaten Einrichtung dem Gemisch eine Säure zugeführt wird.

Grundsätzlich ist es erfindungsgemäß auch möglich, alternativ oder zusätzlich zu Phosphaten andere Stoffe aus der Verbrennungsasche zu gewinnen, indem die Nassklassierung und somit der Umstand ausgenutzt wird, dass aufgrund des ohnehin erfolgenden intensiven Kontaktes der Asche mit einer Flüssigkeit eine Rücklösung von in der Asche enthaltenen Stoffen erfolgt, wobei erforderlichenfalls die bei der Nassklassierung verwendete Flüssigkeit in geeigneter Weise angereichert wird. Diese Gewinnung von verwertbaren Stoffen aus mit einer geeigneten Flüssigkeit behandelter Müllverbrennungsasche in Verbindung mit einer Nassklassierung der Asche stellt einen selbständigen, separat beanspruchbaren Aspekt der Erfindung dar.

Während bislang in der Praxis die HMVA meist über einen relativ langen Zeitraum von z.B. drei Monaten abgelagert wurde, bevor mit einer Aufbereitung bzw. Behandlung begonnen wurde, ist erfindungsgemäß vorzugsweise vorgesehen, dass mit der Aufbereitung bzw. Behandlung der Asche vergleichsweise früh nach deren Entstehung begonnen wird. Dies hat den Vorteil, dass ein als nachteilig erkanntes Verkleben oder Versintern der Asche nicht oder nur in einem unkritischen Maße erfolgt. Gelagerte Asche dagegen neigt zum Verkleben bzw. Versintern, und zwar aufgrund der während der Lagerung ablaufenden chemischen Reaktionen. Verklebte Asche muss vor oder während der Aufbereitung bzw. Behandlung erst mit "schwerem Gerät", d.h. mit gerade nicht-schonendem mechanischen Aufwand aufgetrennt werden. Auch hat eine Lagerung der Asche zur Folge, dass enthaltene Metalle stark mit Asche behaftet sein kann, was eine optische Sichtung der Metalle erschwert oder unmöglich macht. Durch eine frühzeitige Aufbereitung bzw. Behandlung der HMVA in einem Nassprozess kann es zu einem nachteiligen Verkleben bzw. Versintern der Asche gar nicht erst kommen bzw. werden die nachteiligen chemischen Reaktionen abgekürzt. Nach dieser Aufbereitung bzw. Behandlung kann es also nicht mehr zu einem nachteiligen Verkleben bzw. Versintern der Asche kommen.

Die Erfindung wird im Folgenden beispielhaft unter Bezugnahme auf die Zeichnung beschrieben, deren einzige Figur schematisch ein Ausführungsbeispiel einer erfindungsgemäßen Vorrichtung zeigt, in der ein erfindungsgemäßes Verfahren durchgeführt werden kann.

Die erfindungsgemäße Vorrichtung umfasst eine Aufbereitungsanlage 11 mit verschiedenen Einrichtungen, die nachstehend näher beschrieben wird. Die Aufbereitungsanlage 11 ist von einer Müllverbrennungsanlage unabhängig. Insbesondere kann die Aufbereitungsanlage 11 an einem beliebigen Ort errichtet und von einer Müllverbrennungsanlage getrennt betrieben werden, wobei dies aber nicht zwingend und grundsätzlich auch eine Integration in eine Müllverbrennungsanlage möglich ist.

Mit der erfindungsgemäßen Anlage 11 ist es möglich, die Verbrennungsasche so, wie sie bei der Müllverbrennung entsteht, in der nachstehend erläuterten Weise aufzubereiten. Insbesondere ist eine wie auch immer geartete Vorbehandlung oder vorbereitende Aufbereitung der Asche A nicht zwingend erforderlich. Gleichwohl sieht ein bevorzugtes Ausführungsbeispiel der Erfindung vor, dass die Müllverbrennungsasche vor dem Einbringen in die Aufbereitungsanlage 11 einer mechanischen, insbesondere trockenen Vorbehandlung unterworfen wird, bei der aus der Asche Metallteile und unverbrannte Störstoffe entfernt werden.

Das erfindungsgemäße Aufbereitungsverfahren und die erfindungsgemäße Aufbereitungsanlage 11 eignen sich insbesondere für die Aufbereitung von Hausmüllverbrennungsasche. Die Erfindung ist aber nicht hierauf beschränkt. So ist es grundsätzlich auch möglich, andere Verbrennungsrückstände in der erfindungsgemäßen Art und Weise aufzubereiten, beispielsweise Asche oder Schlacke, die bei der Verbrennung von Gewerbemüll entsteht.

Bei dem hier erläuterten Ausführungsbeispiel der Erfindung wird die in eine Mischstufe 21 der Anlage 11 eingebrachte, zuvor von Metallteilen und unverbrannten Störstoffen befreite Asche A in drei Fraktionen I, II und III getrennt, nämlich in eine Feinfraktion I sowie in zwei Grobfraktionen II und III. Die Grobfraktionen II und III sind nicht mit Schadstoffen belastet und können auf Halden 29, 31 gelagert werden, bevor sie einer Verwertung zugeführt werden. Die ursprünglich in der Asche A enthaltenen Schadstoffe befinden sich in der Feinfraktion I, die nicht ohne weiteres verwertet werden kann und beispielsweise auf einer Deponie 33 gelagert wird.

Die üblicherweise in Hausmüllverbrennungsasche (im Folgenden kurz: HMVA) enthaltenen Schadstoffe sind grundsätzlich bekannt. Als Beispiele seien hier Sulfat, Chlorid, Anhydrid und TOC (gesamter organischer Kohlenstoff) erwähnt. Hinsichtlich des Anhydrids ist zu erwähnen, dass es im Hinblick auf eine mögliche Wiederverwertung von HMVA, beispielsweise im Straßenbau, hier auch deshalb zu den Schadstoffen gezählt wird, da es durch Aufnahme von Wasser sein Volumen erheblich vergrößert, d.h. aufquillt, und folglich sprengende Wirkung entfalten kann, was zur Zerstörung der betreffenden Bauwerke führen kann.

In der erfindungsgemäßen Anlage 11 erfolgt die Aufbereitung der Asche A durch Nassklassierung.

Hierzu wird die Asche A in der Mischstufe 21 mit einer Flüssigkeit gemischt. Bevorzugt wird als Flüssigkeit Wasser W verwendet. Im Hinblick auf eine besonders vorteilhafte Ausgestaltung der erfindungsgemäßen Aufbereitung, auf die nachstehend näher eingegangen wird, wird als Flüssigkeit eine bestimmte wässrige Lösung verwendet, nämlich eine saure wässrige Lösung. Der Einfachheit halber wird die hier verwendete Flüssigkeit nachstehend auch einfach als "Wasser" oder "Lösung" bezeichnet.

Das Mischen der Asche A mit dem Wasser kann im Sinne eines Einweichens oder Einmaischens erfolgen. Dementsprechend kann die Mischstufe 21 auch als ein Einweicher oder Einmaischer bezeichnet werden.

Das Mischen der Asche A in der Mischstufe 21 erfolgt in kornschonender Weise, um eine Zerkleinerung der eingebrachten Aschepartikel zumindest weitgehend zu vermeiden. Sofern überhaupt vorgesehen, kann eine mechanische Einwirkung auf die Asche A in der Mischstufe beispielsweise mittels eines Vibrationstellers erfolgen.

Eine kornschonende Behandlung der Asche A erfolgt nicht nur in der Mischstufe 21. Vielmehr ist die gesamte Anlage 11 für eine kornschonende Ascheaufbereitung ausgelegt. Wie eingangs bereits erwähnt, ist dem Fachmann der Begriff der "Komschonung" bekannt. Insbesondere wird hierunter verstanden, dass solche Einrichtungen bzw. Verfahrensschritte weder bewusst eingesetzt noch in Kauf genommen werden, bei denen die Aschepartikel zerkleinert werden. Eine kornschonende Behandlung schließt freilich nicht aus, dass ursprünglich lediglich aneinander haftende Aschepartikel voneinander getrennt werden.

In diesem Zusammenhang ist zu erwähnen, dass dem Fachmann zwar grundsätzlich verschiedene Nassklassierungsmethoden bekannt sind, die als kornschonend bezeichnet werden können, dass der Fachmann darüber hinaus aber auch solche im Rahmen einer Nassklassierung einsetzbaren Methoden kennt, die eine Zerkleinerung der zu klassierenden Partikel bewusst herbeiführen sollen oder in Kauf nehmen. Beispielhaft sei diesbezüglich die so genannte Schwertwäsche erwähnt. Der Einsatz derartiger nicht-kornschonender Methoden der Nassklassierung erfolgt erfindungsgemäß bewusst nicht.

Das der Mischstufe 21 zugeführte Wasser wird von einem geschlossenen Wasserkreislauf W bereitgestellt. Die Bezeichnung als "geschlossen" schließt freilich nicht aus, dass verbrauchte Flüssigkeit ersetzt und - sofern wie in dem hier beschriebenen Ausführungsbeispiel vorgesehen - Flüssigkeit für eine nachstehend erläuterte zusätzliche Rückgewinnung von Phosphaten P auch ohne Rückführung in den Kreislauf W entnommen werden kann.

Zur Herstellung des erwähnten sauren Milieus wird der Mischstufe 21 außerdem eine Säure S zugeführt, bei der es sich insbesondere um vergleichsweise kostengünstig erhältliche Citronensäure oder um Schwefelsäure handelt. Bei dem erwähnten Flüssigkeitskreislauf W handelt es sich in dem hier erläuterten bevorzugten Ausführungsbeispiel der Erfindung also um einen Kreislauf einer sauren wässrigen Lösung. Für die erfindungsgemäße Nassklassierung an sich ist ein saures Milieu weder zwingend erforderlich noch nachteilig, da alle relevanten Anlagenteile problemlos säurefest ausgelegt werden können.

Die mit dem Wasser gemischte, d.h. die eingeweichte oder eingemaischte Asche A, die noch alle drei eingangs erwähnten Fraktionen I, II und III enthält, wird anschließend einer ersten Klassierstufe 17 zugeführt, bei der es sich um eine Siebeinrichtung handelt, die derart ausgelegt ist, dass alle Aschepartikel mit einer Korngröße von mehr als 4 mm abgetrennt werden.

In dieser ersten Klassierstufe 17 wird die Asche mit aus dem erwähnten Kreislauf stammenden Wasser W bebraust und bei den genannten 4 mm abgesiebt.

Was die in Zusammenhang mit der Erläuterung dieses Ausführungsbeispiels erwähnten Korngrößen der Aschepartikel anbetrifft, so ist hier vorgesehen, dass bei einer mechanischen, insbesondere trockenen Vorbehandlung der von der Müllverbrennungsanlage stammenden Asche Metallteile und unverbrannte Störstoffe entfernt werden, wobei diese Vorbehandlung derart erfolgt, dass die Korngrößenverteilung der in die Mischstufe 21 eingebrachten Asche A eine Obergrenze von etwa 45 mm aufweist.

Die mittels der ersten Klassierstufe 17 abgetrennte erste Grobfraktion III besitzt somit eine Korngrößenverteilung von etwa 4 bis 45 mm. Diese Grobfraktion III wird aus der Anlage 11 herausgeführt und auf der bereits erwähnten Halde 29 gelagert.

Der verbleibende Ascheanteil mit einer Korngrößenverteilung von etwa 0 bis 4 mm, der somit die eingangs erwähnte Feinfraktion I und die weitere Grobfraktion II enthält, wird anschließend einer zweiten Klassierstufe zugeführt, die einen Aufstromklassierer 15 mit vorgeschaltetem Hydrozyklon 13 umfasst. Derartige Anordnungen sind grundsätzlich bekannt, so dass auf Aufbau und Funktionsweise dieser zweiten Klassierstufe nicht näher eingegangen wird. Hervorzuheben ist, dass sowohl in einem Hydrozyklon als auch in einem Aufstromklassierer die zu klassierenden Partikel äußerst schonend behandelt werden. Dies bedeutet, dass die Korngrößenverteilung des von der ersten Klassierstufe 17 kommenden Ascheanteils auch durch die zweite Klassierstufe 13, 15 praktisch nicht verändert wird.

In dem hier erläuterten Ausführungsbeispiel ist die zweite Klassierstufe 13, 15 derart ausgelegt bzw. eingestellt, dass aus dem eingebrachten Produkt eine zweite Grobfraktion II abgetrennt wird, die eine Korngrößenverteilung etwa im Bereich von 0,25 mm bis 4 mm aufweist. Diese Grobfraktion II wird einer Siebeinrichtung 35 zugeführt, bei der es sich beispielsweise um ein so genanntes "E-Sieb" handeln kann, das zwei Siebdecks umfasst, wobei das Material auf dem oberen Siebdeck mit Wasser W bebraust und auf dem unteren Siebdeck entwässert wird. Hierbei wird das Wasser W dem erwähnten Kreislauf entnommen und diesem Kreislauf auch wieder zugeführt.

Auch die auf diese Weise entwässerte weitere Grobfraktion II wird anschließend aus der Anlage 11 herausgeführt und auf der bereits erwähnten Halde 31 gelagert.

Wie vorstehend erwähnt, ist die zweite Klassierstufe 13, 15 derart eingestellt, dass nach dem Abtrennen der zweiten Grobfraktion II die verbleibende Feinfraktion I eine Obergrenze der Korngröße von etwa 0,25 mm, also von etwa 250 µm, aufweist. Die Auslegung der Anlage 11 und insbesondere der zweiten Klassierstufe 13, 15 derart, dass diese Obergrenze für die Korngröße der Feinfraktion I exakt eingehalten wird, ist nicht zwingend. Insbesondere in Abhängigkeit von der eingebrachten Asche A und insbesondere von Art und Menge der darin enthaltenen, in der Feinfraktion I zu konzentrierenden Schadstoffen ist die Obergrenze für die Korngröße der Feinfraktion I derart gewählt, dass sichergestellt ist, dass sich - gegebenenfalls bis auf einen insbesondere hinsichtlich geltender gesetzlicher Bestimmungen tolerierbaren Rest - alle relevanten Schadstoffe an die die Feinfraktion I bildenden Partikel binden. Insbesondere wird diese Obergrenze derart gewählt, dass sie weder zu niedrig ist, da ansonsten auch die nächsthöhere Grobfraktion in nicht mehr tolerierbarem Umfang mit Schadstoffen belastet ist, noch zu hoch ist, da ansonsten der Trockengewichtsanteil der Feinfraktion I an der eingebrachten Asche A unnötig groß ist.

Auf diese Weise wird erreicht, dass sich alle relevanten Schadstoffe der in die Anlage 11 eingebrachten Asche A in der Feinfraktion I befinden, die außerdem hinsichtlich ihres Trockengewichtsanteils an der eingebrachten Asche A minimiert ist. Die aufgehaldeten Grobfraktionen III und II sind insofern von zumindest einem Großteil der Schadstoffe befreit und können im Einklang mit den jeweils geltenden gesetzlichen Vorschriften einer Wiederverwertung, beispielsweise im Straßenbau, zugeführt werden.

Der von der zweiten Klassierstufe 13, 15 kommenden Feinfraktion I wird anschließend in einem Rundeindicker 23 Flüssigkeit entzogen.

Anschließend wird die Feinfraktion I mittels einer Exzenterpumpe 25 einer Kammerfilterpresse 19 zugeführt. Anstelle einer Kammerfilterpresse kann beispielsweise auch ein Zyklon vorgesehen sein, um die Feinfraktion I weiter zu entwässern. Die Verwendung einer Kammerfilterpresse hat sich bislang allerdings als besonders vorteilhaft herausgestellt.

Die aus dieser von dem Rundeindicker 23, der Exzenterpumpe 25 und der Kammerfilterpresse 19 gebildeten Entfeuchtungsstufe herausgeführte Feinfraktion I ist derart weit entfeuchtet worden, dass sie stichfest ist und somit deponiert werden kann. Das in dieser Entfeuchtungsstufe anfallende Wasser W wird dem Kreislauf wieder zugeführt.

Versuche haben ergeben, dass die hier beschriebene Art und Weise einer Nassklassierung von HMVA mit einer Obergrenze der ursprünglichen Korngrößenverteilung von etwa 45 mm eine Feinfraktion I mit Korngrößen bis zu 0,25 mm ergibt, wobei die Feinfraktion I zum einen alle relevanten Schadstoffe enthält und zum anderen nur etwa 10 % des Trockengewichts der in die Anlage 11 eingebrachten Asche A darstellt. Dies bedeutet, dass mit den beiden entstehenden Grobfraktionen III und II ein Trockengewichtsanteil von etwa 90 % der in die Anlage 11 eingebrachten Asche A problemlos verwertet werden kann, da diese Grobfraktionen III und II schadstoffarm oder schadstofffrei sind.

Bereits aufgrund dieser bislang nicht für realisierbar gehaltenen Verwertungsmöglichkeit für Müllverbrennungsasche ist die praktische Realisierung der Erfindung trotz der Kosten für die Errichtung und den Betrieb der erfindungsgemäßen Aufbereitungsanlage 11 wirtschaftlich in hohem Maße interessant. Hinzu kommt, dass die Betreiber von Müllverbrennungsanlagen ein Interesse daran haben, nicht selbst für eine vorschriftsmäßige Entsorgung der Verbrennungsasche sorgen zu müssen, denn bislang erfolgt diese Entsorgung durch Deponieren oder mit hohen Auflagen verbundenes Verwerten der gesamten bei der Müllverbrennung entstehenden Asche, was aufgrund der enthaltenen Schadstoffe und der diesbezüglichen gesetzlichen Bestimmungen mit hohen Kosten verbunden ist. Folglich sind die Betreiber von Müllverbrennungsanlagen dazu bereit, für die Abnahme der Verbrennungsasche zu bezahlen. Die Wirtschaftlichkeit der erfindungsgemäßen Ascheaufbereitung wird dadurch weiter erhöht, da bereits die Annahme der in die Aufbereitungsanlage einzubringenden Asche mit Einnahmen verbunden sein kann. Sofern die erwähnte Vorbehandlung der aus der Müllverbrennungsanlage stammenden Asche zum Entfernen von Metallteilen und/oder unverbrannten Störstoffen überhaupt durchgeführt wird, steht diese Vorbehandlung der Wirtschaftlichkeit der erfindungsgemäßen Vorgehensweise nicht entgegen.

In dem hier beschriebenen Ausführungsbeispiel der Erfindung wird darüber hinaus die Wirtschaftlichkeit der Ascheaufbereitung weiter dadurch gesteigert, dass aus der in die Anlage 11 eingebrachten Asche A Stoffe gewonnen werden, die wiederum einer Verwertung zugeführt werden können. Diese Nutzung der Asche A, insbesondere die nachstehend erläuterte Rückgewinnung von Phosphaten, stellt unabhängig von der Nassklassierung der Asche A einen selbständigen, separat beanspruchbaren Aspekt der Erfindung dar.

Wie erwähnt, betrifft diese weitere Nutzung der Verbrennungsasche in dem hier beschriebenen Ausführungsbeispiel die Rückgewinnung von Phosphaten P. Hierbei wird der Umstand ausgenutzt, dass bei der vorstehend beschriebenen Nassklassierung die Asche A ohnehin mit einer Flüssigkeit zusammenwirkt. Insbesondere der geschlossene Flüssigkeitskreislauf W hat zur Folge, dass die Flüssigkeit relativ lange und intensiv mit der Asche A zusammenwirken kann, was erfindungsgemäß ausgenutzt wird.

Durch eine geeignete Wahl der Flüssigkeit kann somit eine Rücklösung von in der eingebrachten Asche A enthaltenen Phosphaten P erfolgen, wobei diese Phosphate P in einem weiteren Verfahrensschritt wieder isoliert werden können.

Wie vorstehend bereits erwähnt, wird in dem bevorzugten Ausführungsbeispiel als Flüssigkeit für die Nassklassierung Wasser W verwendet, das in der Mischstufe 21 mit Säure S, insbesondere mit Citronensäure oder Schwefelsäure, angereichert wird. Das bei der Nassklassierung erfolgende Mischen bzw. Einweichen oder Einmaischen der Asche A mit der Flüssigkeit stellt somit gleichzeitig eine Behandlung der Asche A mit einer sauren wässrigen Lösung dar, die eine Rücklösung der in der Asche A enthaltenen Phosphate P zur Folge hat.

Im Rahmen der hier beschriebenen Nassklassierung der Asche A, für die ein saures Milieu nicht zwingend, aber auch nicht von Nachteil ist, da alle relevanten Anlagenteile säurefest ausgelegt sind, ist diese Art der Rückgewinnung von Phosphaten P besonders vorteilhaft, da das Mischen der Asche A mit dem Wasser bzw. der sauren wässrigen Lösung und insbesondere der geschlossene Flüssigkeitskreislauf eine besonders lang andauernde und innige Reaktion der Asche A mit der sauren wässrigen Lösung ermöglicht. Allgemein stellt diese Kombination - schlagwortartig ausgedrückt also die Nassklassierung von Müllverbrennungsasche mit integrierter Rückgewinnung von verwertbaren Stoffen, insbesondere Phosphaten - ebenfalls einen unabhängigen, selbständigen und separat beanspruchbaren Aspekt der Erfindung dar.

Die Rücklösung der Phosphate P wird durch eine höhere Temperatur der sauren wässrigen Lösung begünstigt, ohne hierdurch die Nassklassierung zu beeinträchtigen. Unter Berücksichtigung des für die Erwärmung der Flüssigkeit erforderlichen Energieeintrags und der damit verbundenen Kosten wird die Temperatur derart gewählt, dass die Anlage insgesamt in einem wirtschaftlichen Optimalbereich gefahren werden kann. Es wurde gefunden, dass dies bereits bei einer Temperatur der sauren wässrigen Lösung in dem geschlossenen Kreislauf im Bereich von 20 bis 40°C möglich ist.

Die Entnahme von Flüssigkeit einschließlich der darin rückgelösten Phosphate P, nachstehend auch als Lösung L bezeichnet, kann problemlos während des laufenden Nassklassierungsbetriebs erfolgen.

Grundsätzlich ist eine laufende Entnahme der Lösung L möglich. Alternativ kann vorgesehen sein, dass nur zu bestimmten Zeitpunkten eine bestimmte Menge der Lösung L dem Kreislauf W entnommen wird. Diese Zeitpunkte können insbesondere in Abhängigkeit von dem pH-Wert der umlaufenden Flüssigkeit gewählt werden.

Die Entnahme der die rückgelösten Phosphate P enthaltenen Lösung L kann grundsätzlich an einer beliebigen Stelle des Flüssigkeitskreislaufs W erfolgen. Hierzu kann eine Entnahmeeinrichtung vorgesehen sein, die in Abhängigkeit von dem pH-Wert der Lösung L steuer- bzw. regelbar ist.

Die Lösung L wird einer Isoliereinrichtung 27 zugeführt, in welcher auf grundsätzlich bekannte Art und Weise eine Rückfällung der Phosphate P erfolgt. Die nach der Isolierung der Phosphate P verbleibende Flüssigkeit wird wieder dem Kreislauf W zugeführt.

Auf diese Weise entsteht mit den Phosphaten P, die aus der dem Kreislauf W entnommenen Lösung L isoliert werden, ein wertvoller Rohstoff, der wiederum einer gewinnbringenden Verwertung zugeführt werden kann.

Da die Rückfällung von Phosphaten aus einer Lösung einschließlich dabei einzusetzender Verfahren und Einrichtungen an sich grundsätzlich bekannt ist, wird an dieser Stelle hierauf nicht näher eingegangen.

Grundsätzlich ist es erfindungsgemäß auch möglich, alternativ oder zusätzlich zu Phosphaten andere Stoffe aus der Verbrennungsasche zu gewinnen, indem die Nassklassierung und somit der Umstand ausgenutzt wird, dass aufgrund des ohnehin erfolgenden intensiven Kontaktes der Asche mit einer Flüssigkeit eine Rücklösung von in der Asche enthaltenen Stoffen erfolgt, wobei erforderlichenfalls die bei der Nassklassierung verwendete Flüssigkeit in geeigneter Weise angereichert wird. Diese Gewinnung von verwertbaren Stoffen aus mit einer geeigneten Flüssigkeit behandelter Müllverbrennungsasche stellt auch unabhängig von einer Nassklassierung der Asche einen selbständigen, separat beanspruchbaren Aspekt der Erfindung dar.

In dem in der Figur dargestellten Ausführungsbeispiel ist vor den Rundeindicker 23 eine Messeinrichtung in Form einer potentiometrischen Sonde 41 geschaltet, mit welcher die elektrische Leitfähigkeit der Flüssigkeit gemessen werden kann. Erreicht die Leitfähigkeit einen vorgegebenen Wert, der beispielsweise durch den Betreiber der Aufbereitungsanlage oder das Klärwerk vor Ort vorgegeben sein kann, so wird eine vorgegebene Menge der Flüssigkeit ausgeschleust und durch frische Flüssigkeit, insbesondere Frischwasser, ersetzt. Die Wasserausschleusung E kann - wie in der Figur beispielhaft dargestellt - in Prozessrichtung gesehen hinter dem Rundeindicker 23 erfolgen.

Des Weiteren ist bei dem hier gezeigten Ausführungsbeispiel vorgesehen, dass vor der Aufhaldung der beiden Grobfraktionen II, III, jeweils eine Metallaufbereitung 37, 39 erfolgt. Diese kann je nach den Gegebenheiten und Anforderungen auf unterschiedlicher Art und Weise erfolgen, wie es beispielhaft im Einleitungsteil bereits erwähnt ist. Die Metallaufbereitung erfolgt vorzugsweise derart, dass die Metalle vor ihrer Abtrennung mit im Nass- bzw. Waschprozess gefahren, d.h. "mitgewaschen", werden, so dass eine optische Sichtung verbessert oder überhaupt erst ermöglich wird, da durch dieses Mitfahren der Metalle im Nassprozess die Metalle besonders sauber werden.

### Bezugszeichenliste

- 11: Aufbereitungsanlage
- 13: Hydrozyklon
- 15: Aufstromklassierer
- 17: Siebeinrichtung
- 19: Kammerfilterpresse
- 21: Mischstufe
- 23: Rundeindicker
- 25: Exzenterpumpe
- 27: Isoliereinrichtung
- 29: Halde
- 31: Halde
- 33: Deponie
- 35: Siebeinrichtung
- 37: Metallaufbereitung
- 39: Metallaufbereitung
- 41: Messeinrichtung

- A: Asche
- I: Feinfraktion
- II: Grobfraktion
- III: Grobfraktion
- W: Wasser, Wasserkreislauf
- L: wässrige Lösung
- S: Säure
- P: Phosphate
- E: Wasserausschleusung

## Patentansprüche

1. Verfahren zum Aufbereiten von Müllverbrennungsasche (A), bei dem ein Verfahren zum Klassieren der Asche (A) und ein Verfahren zur Rückgewinnung von Phosphaten (P) aus der Asche (A) miteinander kombiniert werden,
wobei die Asche (A) einer Nassklassierung unterworfen und dabei mit einer Flüssigkeit (L) gemischt wird,
wobei zur Rücklösung der Phosphate (P) die Asche (A) mit einer sauren wässrigen Lösung (L) behandelt wird und anschließend die in der Lösung (L) enthaltenen Phosphate (P) isoliert werden, und wobei die Flüssigkeit, mit der die Asche (A) im Rahmen der Nassklassierung gemischt wird, die saure wässrige Lösung (L) ist, mit der die Asche (A) zur Rücklösung der Phosphate (P) behandelt wird.

2. Verfahren nach Anspruch 1,
**dadurch gekennzeichnet,**
**dass** für die Nassklassierung der Asche (A) ein im Wesentlichen geschlossener Flüssigkeitskreislauf verwendet wird, dem für die Isolierung der Phosphate zumindest ein Teil der sauren wässrigen Lösung (L), entnommen wird.

3. Verfahren nach Anspruch 1 oder 2,
**dadurch gekennzeichnet,**
**dass** die Asche (A) bei der Nassklassierung unter Anwendung kornschonender Klassierungsverfahren in wenigstens eine mit Schad Stoffen belastete Feinfraktion (I) und zumindest eine schadstoffarme oder schadstofffreie Grobfraktion (II, III) klassiert wird.

4. Verfahren nach einem der vorhergehenden Ansprüche,
**dadurch gekennzeichnet,**
**dass** die Asche (A) ausschließlich durch Nassklassierung klassiert wird,
und/ oder dass die Asche (A) vollständig in wenigstens einen mit Schadstoffen belasteten Anteil (I) und zumindest einen schadstoffarmen oder schadstofffreien Anteil (II, III) klassiert wird.

5. Verfahren nach einem der vorhergehenden Ansprüche,
**dadurch gekennzeichnet,**
**dass** die Asche (A) vor der Nassklassierung, einer mechanischen Vorbehandlung unterworfen wird, bei der aus der Asche (A) Metallteile und unverbrannte Störstoffe entfernt werden,
und/ oder dass die aus einer Müllverbrennungsanlage stammende Asche derart vorbehandelt wird, dass die Asche (A) mit einer Korngrößenverteilung in die Nassklassierung eingebracht wird, deren Obergrenze nicht mehr als etwa 100mm beträgt.

6. Verfahren nach einem der vorhergehenden Ansprüche,
**dadurch gekennzeichnet,**
**dass** bei der Nassklassierung die folgenden Schritte zeitlich nacheinander durchgeführt werden:
- die Asche (A) wird mit der sauren wässrigen Lösung (L) gemischt,
- aus dem dabei entstehenden Produkt wird wenigstens eine erste Grobfraktion (III) abgetrennt,
- aus dem von der ersten Grobfraktion (III) befreiten Produkt wird zumindest eine zweite Grobfraktion (II) abgetrennt und der dabei entstehenden Feinfraktion (I) wird Flüssigkeit (L) entzogen.

7. Verfahren nach einem der vorhergehenden Ansprüche,
**dadurch gekennzeichnet,**
**dass** zur Herstellung der sauren wässrigen Lösung (L) Wasser (W) bereitgestellt und dem Wasser (W) eine Säure (S) zugeführt wird und/oder dass mit der Isolierung der Phosphate (P) in Abhängigkeit von dem pH-Wert der sauren wässrigen Lösung (L) begonnen wird.

8. Verfahren nach einem der vorhergehenden Ansprüche,
**dadurch gekennzeichnet,**
**dass** die Phosphate (P) durch Rückfällung isoliert werden.

9. Verfahren nach einem der vorhergehenden Ansprüche, **dadurch gekennzeichnet, dass** die saure wässrige Lösung (L) eine Temperatur im Bereich von 20 bis 40°C aufweist.

10. Verfahren nach einem der vorhergehenden Ansprüche,
**dadurch gekennzeichnet,**
**dass** die Isolierung der Phosphate (P) in einer Einrichtung (27) erfolgt, die von einer Einrichtung (21) zur Behandlung der Asche (A) mit der Lösung (L) getrennt und der die Lösung (L) gemäß einer Steuer- oder regelbaren Entnahme zuführbar ist und/oder dass das Verfahren in einer von der eigentlichen Müllverbrennung getrennten Aufbereitungslage (11) durchgeführt wird.

11. Verfahren nach einem der vorhergehenden Ansprüche,
**dadurch gekennzeichnet,**
**dass** zumindest ein Parameter einer für die Nassklassierung verwendeten Flüssigkeit unterhalb oder oberhalb eines vorgegebenen Grenzwertes gehalten wird.

12. Aufbereitungsanlage für Müllverbrennungsasche (A) zur Durchführung eines Verfahrens nach einem der vorhergehenden Ansprüche, die zum Klassieren der Asche (A) und zur Rückgewinnung von Phosphaten (P) aus der Asche (A) ausgebildet ist, wobei die Anlage (11) eine Behandlungseinrichtung (21), in der zur Rücklösung der Phosphate (P) die Asche (A) mit einer sauren wässrigen Lösung (L) behandelbar ist, und eine Isoliereinrichtung (27) umfasst, in der die in der Lösung (L) enthaltenen Phosphate (P) isolierbar sind,
wobei die Anlage (11) zu einer Nassklassierung der Asche (A) und dabei zu einem Mischen der Asche (A) mit einer Flüssigkeit (L) ausgebildet ist, und
wobei die Flüssigkeit, mit der die Asche (A) im Rahmen der Nassklassierung mischbar ist, die saure wässrige Lösung (L) ist, mit der die Asche (A) zur Rücklösung der Phosphate (P) behandelbar ist.

13. Aufbereitungsanlage nach Anspruch 12,
**dadurch gekennzeichnet,**
**dass** die Isoliereinrichtung (27) von der Behandlungseinrichtung (21) getrennt ist, wobei der Isoliereinrichtung (27) die Lösung (L) aus der Behandlungseinrichtung (21) mittels einer Steuer- oder regelbaren Entnahmeeinrichtung zuführbar ist und/oder dass die Anlage (11) zumindest für die Nassklassierung wenigstens einen im Wesentlichen geschlossenen Flüssigkeitskreislauf aufweist.

14. Aufbereitungsanlage nach Anspruch 12 oder 13, **dadurch gekennzeichnet,**
**dass** die Anlage (11) kornschonende Nassklassierungseinrichtungen umfasst und derart ausgelegt ist, dass die Asche (A) in wenigstens eine mit Schadstoffen belastete Feinfraktion (I) und zumindest eine schadstoffarme oder schadstofffreie Grobfraktion (II, III) klassierbar ist, und/oder dass die Anlage (11) derart ausgelegt ist, dass in der Feinfraktion (I) die Untergrenze der Korngröße 0 µm beträgt und die Obergrenze der Korngröße ungefähr im Bereich von 50 bis 500 µm liegt.

15. Aufbereitungsanlage (11) nach einem der Ansprüche 12 bis 14, **dadurch gekennzeichnet,**
**dass** die Anlage (11) eine Mischstufe (21) umfasst, in der die Asche (A) mit der Flüssigkeit (L) gemischt wird.

## Claims

1. A process for processing waste incineration ash (A), wherein a process for classifying the ash (A) and a process for the recovery of phosphates (P) from the ash (A) are combined with each other,
wherein the ash (A) is subjected to a wet classification and mixed thereby with a liquid (L),
wherein, for the resolution of the phosphates (P), the ash (A) is treated with an acidic aqueous solution (L) and then the phosphates (P) contained in the solution (L) are isolated, and wherein the liquid with which the ash (A) is mixed in the framework of the wet classification is the acidic aqueous solution (L) with which the ash (A) is treated for the resolution of the phosphates (P).

2. The process according to claim 1,
**characterized in**
**that** for the wet classification of the ash (A) an essentially closed liquid circuit is used, from which at least part of the acidic aqueous solution (L) is taken for the isolation of the phosphates.

3. The process according to claim 1 or 2,
**characterized in**
**that** the ash (A) is classified in the wet classification using grain-friendly classification methods as at least one fine fraction (I) contaminated with pollutants and at least one low-pollutant or pollutant-free coarse fraction (II, III).

4. The process according to one of the preceding claims,
**characterized in**
**that** the ash (A) is classified exclusively by wet classification,
and/or that the ash (A) is completely classified as at least one proportion (I) contaminated with pollutants and at least one low-pollutant or pollutant-free proportion (II, III).

5. The process according to one of the preceding claims,
**characterized in**
**that** the ash (A) is subjected before the wet classification to a mechanical pre-treatment in which metal parts and unburned contaminants are removed from the ash (A), and/or that the ash originating from a waste incineration plant is pre-treated in such a way that the ash (A) is introduced into the wet classification with a grain size distribution, the upper limit of which is not more than about 100mm.

6. The process according to one of the preceding claims,
**characterized in**
**that** the following steps are carried out one after the other for the wet classification:
- the ash (A) is mixed with the acidic aqueous solution (L),
- at least one first coarse fraction (III) is separated from the product generated by it,
- at least one second coarse fraction (II) is separated from the product freed from the first coarse fraction (III) and liquid (L) is removed from the fine fraction (I) generated by it.

7. The process according to one of the preceding claims,
**characterized in**
**that** for the preparation of the acidic aqueous solution (L) water (W) is provided and an acid (S) is supplied to the water (W) and / or that the isolation of the phosphates (P) is started depending on the pH-value of the acidic aqueous solution (L).

8. The process according to one of the preceding claims,
**characterized in**
**that** the phosphates (P) are isolated by further precipitation.

9. The process according to one of the preceding claims, **characterized in**
**that** the acidic aqueous solution (L) has a temperature in the range of 20 to 40°C.

10. The process according to one of the preceding claims,
**characterized in**
**that** the isolation of the phosphates (P) takes place in a device (27) separated from a device (21) for treating the ash (A) with the solution (L) and to which the solution (L) can be feed according to a controllable or adjustable removal and/or that the process is carried out in a processing plant (11) separate from the actual waste incineration.

11. The process according to one of the preceding claims,
**characterized in**
**that** at least one parameter of a liquid used for the wet classification is maintained to be below or above a predetermined threshold.

12. A process plant for waste incineration ash (A) for carrying out a process according to one of the preceding claims, which is designed for classifying the ash (A) and for recovering phosphates (P) from the ash (A),
wherein the plant (11) comprises a treatment device (21) in which the ash (A) can be treated with an acidic aqueous solution (L) for the resolution of the phosphates (P), and an isolation device (27) in which the phosphates (P) contained in the solution (L) can be isolated,
wherein the plant (11) is formed for a wet classification of the ash (A) and thereby to mix the ash (A) with a liquid (L), and
wherein the liquid, with which the ash (A) can be mixed within the framework of the wet classification, is the acidic aqueous solution (L) with which the ash (A) can be treated for the resolution of the phosphates (P).

13. The process plant according to claim 12,
**characterized in**
**that** the isolation device (27) is separated from the treatment device (21), wherein the solution (L) can be fed from the treatment device (21) to the isolation device (27) by means of a controllable or adjustable removal device and /or that the plant (11) has at least for the wet classification at least one substantially closed liquid circuit.

14. The process plant according to claim 12 or 13, **characterized in**
**that** the plant (11) includes grain-friendly wet classification devices and is designed in such a way that that the ash (A) can be classified as at least one fine fraction (I) contaminated with pollutants and at least one low-pollutant or pollutant-free coarse fraction (II, III), and/or that the plant (11) is designed in such a way that in the fine fraction (I) the lower limit of the grain size is 0 µm and the upper limit of the grain size is approximately in the range of 50 to 500 µm.

15. The process plant (11) according to any one of claims 12 to 14, **characterized in**
**that** the plant (11) comprises a mixing stage (21) in which the ash (A) is mixed with the liquid (L).

## Revendications

1. Un procédé pour traiter une cendre d'incinération des déchets (A), dans lequel un procédé de classification de la cendre (A) et un procédé de récupération des phosphates (P) de la cendre (A) sont combinés,
dans lequel la cendre (A) est soumise à une classification humide et y mélangée à un liquide (L),
dans lequel, pour la résolution des phosphates (P), la cendre (A) est traitée avec une solution aqueuse acide (L) et puis les phosphates (P) contenus dans la solution (L) sont isolés, et dans lequel le liquide avec lequel la cendre (A) est mélangée dans le cadre de la classification humide, est la solution aqueuse acide (L) avec laquelle la cendre (A) est traitée pour la résolution des phosphates (P).

2. Le procédé selon la revendication 1,
**caractérisé en ce**
**que**, pour la classification humide des cendres (A), un circuit liquide essentiellement fermé est utilisé, à partir duquel au moins une partie de la solution aqueuse acide (L) est prélevée pour l'isolement des phosphates.

3. Le procédé selon la revendication 1 ou 2,
**caractérisé en ce**
**que** la cendre (A) est classée dans la classification humide à l'aide de procédés de classification favorables aux grains comme au moins une fraction fine (I) contaminée par des polluants et au moins une fraction grossière peu polluante ou sans polluants (II, III).

4. Le procédé selon l'une des revendications précédentes,
**caractérisé en ce**
**que** la cendre (A) est classée exclusivement par classification humide,
et/ou que la cendre (A) est complètement classée comme au moins une proportion contaminée par des polluants (I) et au moins une proportion peu polluante ou sans polluants (II, III).

5. Le procédé selon l'une des revendications précédentes,
**caractérisé en ce**
**que** la cendre (A) est soumise avant la classification humide à un prétraitement mécanique, dans lequel des pièces métalliques et des contaminants non brûlés sont enlevés des cendres (A),
et/ou que la cendre provenant d'une installation d'incinération des déchets est prétraitée de telle sorte que la cendre (A) soit introduite dans la classification humide avec une distribution de la taille du grain, dont la limite supérieure n'est pas supérieure à environ 100 mm.

6. Le procédé selon l'une des revendications précédentes,
**caractérisé en ce**
**que** pendant la classification humide les étapes suivantes sont effectuées l'une après l'autre:
- la cendre (A) est mélangée à la solution aqueuse acide (L),
- au moins une première fraction grossière (III) est séparée du produit qui en résulte,
- au moins une fraction grossière seconde (II) est séparée du produit libéré de la première fraction grossière (III) et un liquide (L) est éliminé de la fraction fine (I) qui en résulte.

7. Le procédé selon l'une des revendications précédentes,
**caractérisé en ce**
**que** pour la préparation de la solution aqueuse acide (L) l'eau (W) est fournie et qu'un acide (S) est alimenté à l'eau (W) et/ou que l'isolement des phosphates (P) est commencé en fonction de la valeur pH de la solution aqueuse acide (L).

8. Le procédé selon l'une des revendications précédentes,
**caractérisé en ce**
**que** les phosphates (P) sont isolés par une précipitation supplémentaire.

9. Le procédé selon l'une des revendications précédentes, **caractérisée en ce**
**que** la solution aqueuse acide (L) a une température dans la gamme comprise entre 20 à 40 °C.

10. Le procédé selon l'une des revendications précédentes,
**caractérisé en ce**
**que** l'isolement des phosphates (P) a lieu dans un dispositif (27) séparé d'un dispositif (21) pour traiter la cendre (A) avec la solution (L) et que la solution (L) peut être alimenté selon un prélèvement contrôlable ou réglable et/ou que le procédé est effectué dans une installation de traitement (11) séparée de l'incinération réelle des déchets.

11. Le procédé selon l'une des revendications précédentes,
**caractérisé en ce**
**qu'**au moins un paramètre d'un liquide utilisé pour la classification humide est maintenu au-dessous ou au-dessus d'une valeur limite prédéterminée.

12. Une installation de traitement pour une cendre d'incinération des déchets (A) pour l'exécution d'un procédé selon l'une des revendications précédentes, qui est conçue pour classer la cendre (A) et la récupération des phosphates (P) à partir de la cendre (A),
dans laquelle l'installation (11) comprend un dispositif de traitement (21) dans lequel la cendre (A) peut être traitée avec une solution aqueuse acide (L) pour la résolution des phosphates (P), et un dispositif isolant (27) dans lequel les phosphates (P) contenus dans la solution (L) peuvent être isolés,
dans laquelle l'installation (11) est conçue pour une classification humide de la cendre (A) et y mélanger la cendre (A) avec un liquide (L), et
dans laquelle le liquide avec lequel la cendre (A) peut être mélangée dans le cadre de la classification humide, est la solution acide aqueuse (L) avec laquelle la cendre (A) peut être traitée pour la résolution des phosphates (P).

13. L'installation de traitement selon la revendication 12,
**caractérisée en ce**
**que** le dispositif isolant (27) est séparé du dispositif de traitement (21), dans laquelle la solution (L) peut être alimenté de l'installation de traitement (21) au moyen d'un dispositif de prélèvement contrôlable ou réglable au dispositif isolant (27) et /ou que l'installation (11) a au moins pour la classification humide au moins un circuit liquide sensiblement fermé.

14. L'installation de traitement selon la revendication 12 ou 13, **caractérisée en ce**
**que** l'installation (11) comprend des dispositifs de classification humide favorables aux grains et est conçue de telle sorte que la cendre (A) peut être classée comme au moins une fraction fine (I) contaminée par des polluants et au moins une fraction grossière peu polluante ou sans polluants (II, III), et/ou que l'installation (11) est conçue de telle sorte que dans la fraction fine (I) la limite inférieure de la taille du grain est de 0 µm et la limite supérieure de la taille du grain est approximativement dans la gamme comprise entre 50 à 500 µm.

15. L'installation de traitement (11) selon l'une ou l'autre des revendications 12 à 14,
**caractérisée en ce**
**que** l'installation (11) comprend une étage de mélange (21) dans laquelle la cendre (A) est mélangée avec le liquide (L).
